# EUROPEAN PATENT SPECIFICATION

(11) **EP 2 321 024 B1**
(45) Date of publication and mention of the grant of the patent: **01.01.2014**
(21) Application number: 09807969.2
(22) Date of filing: 21.08.2009
(51) Int. Cl.: B01D 9/02

(54) **METHOD OF SEPARATING COMPONENTS OUT OF A EUTECTIC SOLUTION**
VERFAHREN ZUR TRENNUNG VON BESTANDTEILEN AUS EINER EUTEKTISCHEN LÖSUNG
PROCÉDÉ DE SÉPARATION DE COMPOSANTS D'UNE SOLUTION EUTECTIQUE

(30) Priority: 22.08.2008 ZA 200807293
(43) Date of publication of application: 18.05.2011
(73) Proprietor: University of Cape Town, Cape Town 7701 (ZA)
(72) Inventor: LEWIS, Alison, Emslie, 8001 Oranjezicht (ZA); NATHOO, Jeeten, 7405 Cape Town (ZA)
(74) Representative: Jackson, Richard Eric
(86) International application number: PCT/IB2009/006612
(87) International publication number: WO 2010/020872

(56) References cited:
- WO-A1-2004/089503
- DE-T2- 69 607 610
- JP-A- 2006 176 384
- US-A- 3 704 330
- VAN DER HAM F ET AL: "Eutectic freeze crystallization: Application to process streams and waste water purification", CHEMICAL ENGINEERING AND PROCESSING, ELSEVIER SEQUOIA, LAUSANNE, CH, vol. 37, 1 January 1998 (1998-01-01), pages 207-213, XP002451556, ISSN: 0255-2701

## Description

### FIELD OF THE INVENTION

This invention relates to an improved process for the treatment of brines through separation of components by freezing.

### BACKGROUND TO THE INVENTION

The handling of aqueous salt-bearing and organic-bearing streams, either for the recovery of the salt, or for the reduction of waste streams via a concentration process, is energy intensive and thus costly. It can also be problematic due to the difficulty of disposing of contaminated salts. For mixtures with high solute concentrations, crystallization based separation processes can be applied. In evaporative crystallization, however, the extremely large energy requirements to evaporate the water can be prohibitive. The fact that a mixed salt is produced is also problematic. Anti-solvent crystallization combines extraction with crystallization, but requires an additional step to recover the anti-solvent after the crystallization. Membrane crystallization has many advantages, but is often limited by scale formation on the membrane surface or by membrane damage due to hazardous components in the stream.

Eutectic freeze crystallization (EFC) is a technology for the separation of highly concentrated aqueous streams that is capable of separating aqueous solutions into pure water and pure, solidified solutes. It is highly energy efficient and does not require the introduction of any solvents. However, one of the potential disadvantages of EFC is that it can require very low temperatures, depending on the salts present in the brine. This can make EFC uneconomical compared to other technologies.

### OBJECT OF THE INVENTION

It is an object of this invention to provide a method of separating components out of a eutectic solution which will at least partially alleviate some of the abovementioned problems.

### SUMMARY OF THE INVENTION

A method of separating components out of a eutectic solution of one or more salts which includes the steps of determining the eutectic freezing temperature of the solution, determining a second, higher eutectic freezing temperature achievable by adding a compound to the solution, adding the compound to the solution, cooling the solution to the second temperature to cause a salt to precipitate out of the solution and recovering the salt.

Further features of the invention provide for ice formed at the second temperature to be recovered; the solution to be aqueous or organic; for the solution to be a brine or hypersaline solution that might contain organic components; for the compound to be a salt electrolyte or acid; and for the compound to be selected to influence the aqueous chemistry such that the individual salts that crystallize out are altered and that the crystallization temperatures are increased.

Still further features of the invention provide for the solution to be cooled sequentially to one or more further, lower, eutectic freezing temperatures; and for ice and a salt to be recovered during the or each subsequent cooling.

### BRIEF DESCRIPTION OF THE DRAWINGS

In the drawings:-
- Figure 1: is flow diagram of a process according to the invention;
- Figure 2: is table of the eutectic freezing temperature of various salts;
- Figure 3: is a chart illustrating sodium recovery from a sodium chloride solution according to the prior art and one embodiment of the invention;
- Figure 4: is a chart illustrating water recovery from the sodium chloride solution according to the prior art and the embodiment in Figure 3;
- Figure 5: is a chart illustrating recovery of sodium from a sodium chloride solution according to the prior art and a second embodiment of the invention;
- Figure 6: is a chart illustrating water recovery from the sodium chloride solution according to the prior art and the embodiment in Figure 5; and
- Figure 7: is a chart illustrating sodium ion recovery from a brine solution with and without the addition of sulphuric acid.

### DETAILED DESCRIPTION WITH REFERENCE TO THE DRAWINGS

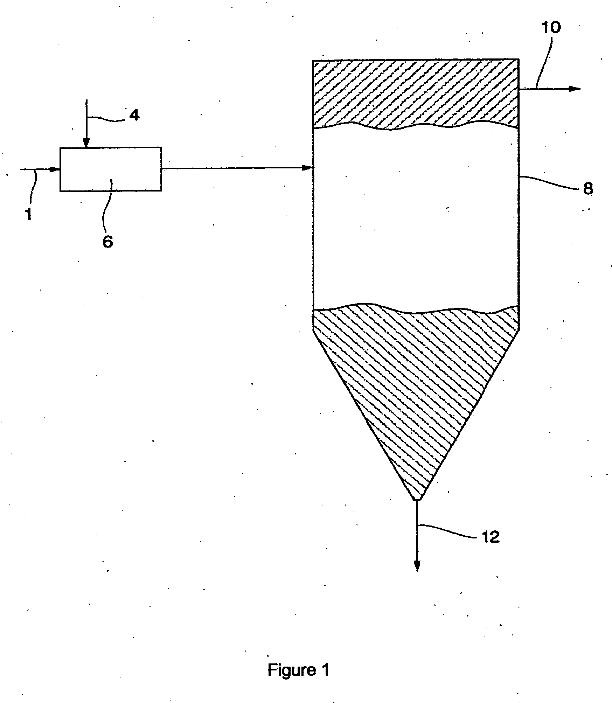

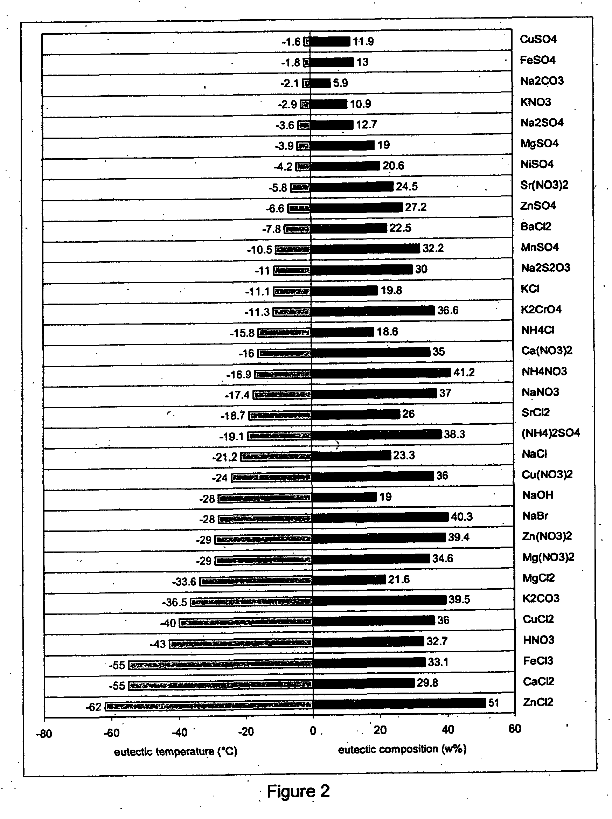

Referring to Figure 1, an example of one process according to the invention includes firstly determining the eutectic freezing temperature of a brine feed (1), in this embodiment a NaCl solution. Hereafter, a second, higher eutectic freezing temperature is determined for the solution (3) obtained by mixing a compound (4) with the brine (1). This is conveniently illustrated with reference to Figure 2 (From Van der Ham, F. Eutectic Freeze Crystallisation, PhD Thesis, TU Delft, 1999). Here it will be noted that a 23.3 w% NaCl solution has a eutectic freezing temperature of -21.2°C, whereas 37 w% NaNO₃ has a eutectic freezing temperature of -17.4°C, 30 w% Na₂S₂O₃ has eutectic freezing temperature of -11°C, 12.7 w% Na₂SO₄ has a eutectic freezing temperature of -3.6°C and 5.9 w% Na₂CO₃ has a eutectic freezing temperature of -2.1°C.

Thus, by adding a compound which converts the Na in the feed (1) to one of the other Na compounds it is possible to obtain a solution with a higher eutectic freezing temperature. The factors to consider when deciding on which compound (4) to add include the availability and cost of the compound (4), the value and usefulness of the resultant salt obtained, the magnitude of the differences between the freezing points of the potential salts of converting the salt in the feed (1) and the complexity of the resultant solution.

In this example, Na₂SO₄ is selected as the further salt as it can be easily obtained by the addition of H₂SO₄ to the feed (1). Also, H₂SO₄ is relatively cheap and freely available. This would ensure that all of the Na⁺ is recovered in the form of Na₂SO₄10H₂O.

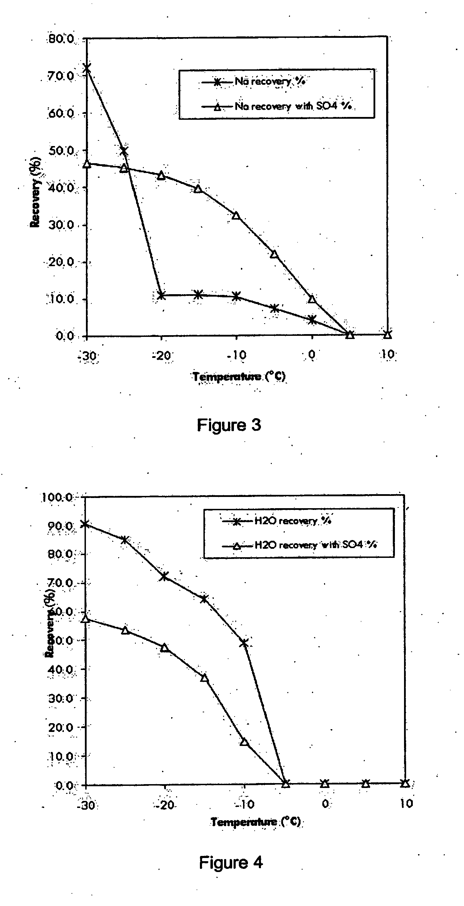

Figures 3 and 4 illustrate the effect of adding H₂SO₄ to the brine. This is calculated using thermodynamic modelling software. The initial NaCl concentration was 0.83mols, with the Na₂SO₄ concentration being 0.18 mols, i.e. 1.19mols of Na in total. After adding H₂SO₄, the possible Na removal was increased. Figure 3 indicates that the Na recovery can be increased from 11 % (0.13mols Na) at -20°C to 43% (0.51 mols) at the same temperature. At - 20°C, the remaining, unrecovered Na in solution is 1.06mols without H₂SO₄ addition compared to 0.68mols with the addition. However, at -30°C, the lowest temperature investigated, the recovery of Na is only 46.5% with H₂SO₄ addition, compared to 72% in the absence of added H₂SO₄. This is due to the freezing point depression caused by the increased ionic strength of the brine when H₂SO₄ is added.

Figure 4 illustrates how the water recovery is affected by the addition of H₂SO₄. At -20°C, the water recovery is 47.6% with added H₂SO₄, but 72% without added H₂SO₄. This is also due to the depression of the freezing point of water due to the increased ionic strength of the solution.

Addition of sulphuric acid thus offers a means of manipulating the eutectic temperatures of the NaCl in solution, with the objective of recovering the Na in the NaCl solution in the form of Na₂SO₄ at elevated temperatures. For this example, where the recovery of the sodium salt is of prime importance, addition of sulphuric acid increased the recovery by 209%, which has significant implications for the feasibility of the process.

The decision about the optimum temperature at which recovery should be performed is made using a cost benefit analysis of the value derived from the salt recovery versus the cost of operating at increasingly lower temperatures.

Using the table in Figure 2 and the modelling then, for a NaCl brine solution, a higher eutectic freezing temperature can be obtained by extracting the sodium in a sulphate form through the addition of sulphuric acid. Referring again to Figure 1, sulphuric acid (4) is added to the feed (2) through a static mixer (6). The resultant solution (3) is then fed into a separator (8) where it is cooled to the optimum temperature calculated using a cost benefit analysis as specified above. This causes the solution to separate into ice (10) and salt (12), the ice floating to the top of the separator (8) and salt precipitating to the bottom. These are continuously removed whilst further solution (3) is fed to the separator (8). The configuration and operation of the separator (8) is known in the prior art and need not be described as it will be fully apparent to one skilled in the art.

After recovery the ice may be discarded or used, for example, to assist in cooling the solution or as water. The ice may contain entrained contaminants and these can be washed off if necessary.

Should it be required, the solution can be fed from the separator (8) to further separators (not shown) for further processing. This may be desirable or necessary where the solution is complex and includes a number of different salts and wherein the solution has a number of different eutectic freezing points. With such a solution, one or more compounds could similarly be added prior to each cooling step to provide a higher eutectic freezing point for that step. Components of the solution could thus be sequentially removed in known fashion but at higher temperatures and thus with greater efficiencies.

The process of the invention thus offers a highly efficient and cost effective method of using salts or electrolyte solutions to elevate the eutectic temperature of a solution to facilitate recovery of a salt in the solution.

It will be appreciated that the selection of the compound to be added to the solution will also be influenced by the component of the solution that is desired to obtain. For example, water may be more valuable than a salt in some situations and here the compound added will selected to maximise ice recovery at the highest suitable temperature. Alternately, one component of the salt in the solution may be more valuable or desirable than another and the compound added to the solution to increase the eutectic freezing point would be selected to enhance recovery of that component.

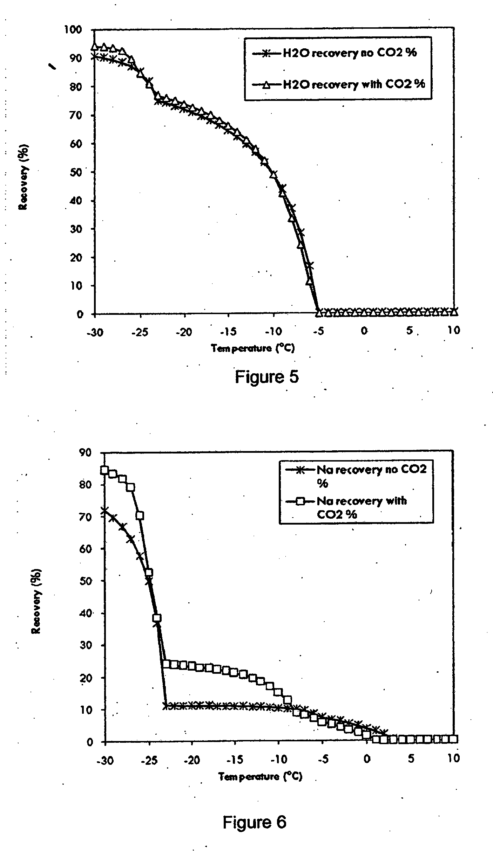

A second example illustrating the invention is the addition of carbonic acid (H₂CO₃) or carbon dioxide gas (CO₂) to a sodium chloride solution in order to recover the sodium as NaHCO₃. The effect of the addition of these compounds is illustrated in Figure 5, where the effect of bubbling CO₂ through the solution has been simulated using a thermodynamic model. The Na recovery at -15°C is now increased from 10.8% (in the case without any addition) to 21.2% (in the case with CO₂ addition). In this case, the water recovery is hardly affected, very slightly improving from 64.3% in the case without CO₂ addition to 66.1 % with the CO₂ addition.

A third example includes a thermodynamic and experimental study which provides a further illustration of the invention. This example relates to the addition of sulphuric acid to enhance the overall recovery of sodium ions in a mixed brine stream. The composition of the mixed brine with and without the addition of the sulphuric acid is shown in Table 1 below:

**Table 1: Mixed brine composition with and without the addition of sulphuric acid**

| | Without H₂SO₄ | With H₂SO₄ |
|---|---|---|
| Component | Weight % | Weight % |
| Na₂SO₄ | 2.00 | 2.00 |
| NaCl | 5.50 | 5.50 |
| NaNO₃ | 2.67 | 2.67 |
| H₂SO₄ | 0.00 | 4.60 |
| H₂O | 89.80 | 85.20 |

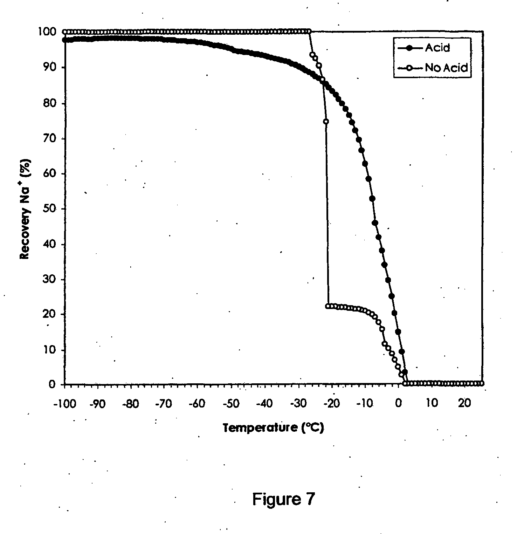

Based on calculations using thermodynamic modelling software for a mixed brine cooled from 25°C down to -100°C without the addition of sulphuric acid, the calculated crystallization temperatures for Na₂SO₄.10H₂O, ice and NaCl.₂H₂O are 2°C, -5°C and -22°C respectively. The thermodynamically calculated crystallization temperatures with the addition of the sulphuric acid for Na₂SO₄.10H₂O, ice and NaCl.2H₂O are 2°C, -7°C and -49°C respectively. Figure 7 illustrates the calculated recovery of sodium ions with and without sulphuric acid as the temperature of the brine is reduced from 25°C to - 100°C.

The advantages of the invention are clearly apparent when comparing the predicted sodium ion recoveries at a temperature of -20°C. The sodium ion recovery increases from 22% to 83% with the addition of the sulphuric acid. This increase in sodium ion recovery is attributed to the addition of the sulphuric acid and consequently the increased availability of sulphate ions for the crystallization of a significantly higher proportion of the sodium ions as Na₂SO₄.10H₂O rather than as NaCl.2H₂O which would be at a lower temperature.

The thermodynamically modelled results were tested by conducting experiments in which both brine solutions were prepared using analytical grade chemicals (Merck) and de-ionized water (18.2mΩ). The experiments were performed in a stirred, 1.5 litre, jacketed glass reactor. The cooling was achieved by cooling Kryo40 using a Lauda RE207 refrigerated circulator set at -8°C and pumping the cooled Kryo40 through the reactor jacket. Each experiment was carried out for a total time of 40 minutes after the initial salt crystallization was detected. At the end of the experiment, the contents of the reactor were filtered under vacuum and the mass of the solids determined. The solid product was then re-filtered under vacuum whilst simultaneously being was washed with 10ml of de-ionized water. Elemental analyses of the unwashed and washed solid products were obtained using X-Ray Fluorescence (XRF) to confirm the salt formed.

Table 2 below shows a summary of the experimental results:

**Table 2: Experimental results for a mixed brine with and without**

| Measured Variable | Without H₂SO₄ | With H₂SO₄ |
|---|---|---|
| Salt crystallization temperature | -4.2°C | -2.8°C |
| Percentage sodium recovery | 7.4% | 19% |

the addition of sulphuric acid

The experimental results substantiate the effectiveness of the invention in achieving a higher sodium ion recovery at a lower temperature.
Table 3 below shows the XRF results of the solid product formed confirming that the salt product is sodium sulphate:

**Table 3: XRF analysis of solids product**

| Element | Purity (%) | | | |
|---|---|---|---|---|
| | No Acid | | Acid Addition | |
| | No wash | One Wash | No wash | One Wash |
| Na | 20 | 25 | 19 | 20 |
| S | 79 | 75 | 80 | 79 |
| Cl | 0.55 | 0.39 | 1.5 | 0.48 |

The invention thus clearly provides a highly effective manner of enhancing the efficiency of salt recovery from solutions.

It will further be appreciated that there are many ways of executing the process of the invention, particularly regarding the compound added to the solution and the conditions under which the process is operated. For example, any suitable compound can be added to the solution and this may be made up of a number of components.

## Claims

1. A method of separating components out of a eutectic solution of one or more salts which includes the steps of determining the eutectic freezing temperature of the solution, determining a second, higher eutectic freezing temperature achievable by adding a compound to the solution, adding the compound to the solution, cooling the solution to the second temperature to cause a salt to precipitate out of the solution, and recovering the precipitated salt.

2. A method as claimed in claim 1 wherein the solution is aqueous.

3. A method as claimed in claim 2 wherein ice formed at the second temperature is recovered.

4. A method as claimed in claim 1 wherein the solution is organic.

5. A method as claimed in any one of the preceding claims wherein the solution is a brine or hypersaline solution.

6. A method as claimed in claim 5 wherein the solution contains organic components.

7. A method as claimed in any one of the preceding claims wherein the compound is a salt electrolyte.

8. A method as claimed in any one of claims 1 to 6 wherein the compound is an acid.

9. A method as claimed in any one of the preceding claims wherein the compound is selected to influence the aqueous chemistry such that the individual salts that crystallize out are altered and that the crystallization temperatures are increased.

10. A method as claimed in any one of the preceding claims wherein the solution is cooled sequentially to one or more further, lower, eutectic freezing temperatures.

11. A method as claimed in claim 10 wherein ice and a salt are recovered during the or each subsequent cooling.

## Patentansprüche

1. Verfahren zum Ausscheiden von Komponenten aus einer eutektischen Lösung eines oder mehrerer Salze, bei dem man die eutektische Gefriertemperatur der Lösung bestimmt, eine zweite, höhere eutektische Gefriertemperatur, die durch Zugabe einer Verbindung zu der Lösung erhältlich ist, bestimmt, die Verbindung zu der Lösung gibt, die Lösung auf die zweite Temperatur abkühlt, um ein Salz zum Ausfallen aus der Lösung zu bringen, und das ausgefallene Salz zurückgewinnt.

2. Verfahren nach Anspruch 1, bei dem die Lösung wässrig ist.

3. Verfahren nach Anspruch 2, bei dem man bei der zweiten Temperatur gebildetes Eis zurückgewinnt.

4. Verfahren nach Anspruch 1, bei dem die Lösung organisch ist.

5. Verfahren nach einem der vorhergehenden Ansprüche, bei dem es sich bei der Lösung um eine Salzsole oder hypersaline Lösung handelt.

6. Verfahren nach Anspruch 5, bei dem die Lösung organische Komponenten enthält.

7. Verfahren nach einem der vorhergehenden Ansprüche, bei dem es sich bei der Verbindung um einen Salzelektrolyten handelt.

8. Verfahren nach einem der Ansprüche 1 bis 6, bei dem es sich bei der Verbindung um eine Säure handelt.

9. Verfahren nach einem der vorhergehenden Ansprüche, bei dem man die Verbindung so gewählt, dass die wässrige Chemie so beeinflusst wird, dass die einzelnen Salze, die auskristallisieren, verändert werden und die Kristallisationstemperaturen erhöht werden.

10. Verfahren nach einem der vorhergehenden Ansprüche, bei dem man die Lösung sequenziell auf eine oder mehrere weitere, niedrigere eutektische Gefriertemperaturen abkühlt.

11. Verfahren nach Anspruch 10, bei dem man während des bzw. jedes Abkühlens Eis und ein Salz zurückgewinnt.

## Revendications

1. Procédé de séparation de composants d'une solution eutectique d'un ou plusieurs sels qui comprend les étapes de détermination de la température de congélation eutectique de la solution, détermination d'une deuxième température de congélation eutectique, plus élevée, atteignable en ajoutant un composé à la solution, addition du composé à la solution, refroidissement de la solution jusqu'à la deuxième température pour faire précipiter un sel à partir de la solution, et récupération du sel précipité.

2. Procédé selon la revendication 1 dans lequel la solution est aqueuse.

3. Procédé selon la revendication 2 dans lequel la glace formée à la deuxième température est récupérée.

4. Procédé selon la revendication 1 dans lequel la solution est organique.

5. Procédé selon l'une quelconque des revendications précédentes dans lequel la solution est une saumure ou une solution hypersaline.

6. Procédé selon la revendication 5 dans lequel la solution contient des composants organiques.

7. Procédé selon l'une quelconque des revendications précédentes dans lequel le composé est un électrolyte salin.

8. Procédé selon l'une quelconque des revendications 1 à 6 dans lequel le composé est un acide.

9. Procédé selon l'une quelconque des revendications précédentes dans lequel le composé est choisi pour influencer la chimie aqueuse de telle sorte que les sels individuels qui cristallisent soient modifiés et que les températures de cristallisation soient augmentées.

10. Procédé selon l'une quelconque des revendications précédentes dans lequel la solution est successivement refroidie jusqu'à une ou plusieurs autres températures de congélation eutectique, plus basses.

11. Procédé selon la revendication 10 dans lequel de la glace et un sel sont récupérés pendant le ou chaque refroidissement consécutif.
